# EUROPÄISCHE PATENTSCHRIFT

(11) **EP 1 287 733 B1**
(45) Veröffentlichungstag und Bekanntmachung des Hinweises auf die Patenterteilung: **16.02.2005**
(21) Anmeldenummer: 02016451.3
(22) Anmeldetag: 23.07.2002
(51) Int. Cl.: A01D 61/00, A01D 89/00

(54) **Einzugsfinger und Erntezusammenbau**
Retractable finger and harvesting assembly
Doigt rétractable et ensemble de récolte

(30) Priorität: 31.08.2001 US 944645
(43) Veröffentlichungstag der Anmeldung: 05.03.2003
(73) Patentinhaber: DEERE & COMPANY, Moline, Illinois 61265-8098 (US)
(72) Erfinder: Sheedy, Ronald Leo, Eldridge, IA 52748 (US); Ward, Frederick Samuel, Moline, IL 61265 (US); Dennehy, Keith Thomas, Winona, MN 55987 (US); Tingle, Kyle John, Colona, IL 61241 (US)
(74) Vertreter: Holst, Sönke, Dr.

(56) Entgegenhaltungen:
- EP-A- 0 236 106
- US-A- 3 261 153
- US-A- 3 402 542
- US-B1- 6 244 955

## Beschreibung

Die Erfindung betrifft einen Einzugsfinger zur Verwendung an einem Einzugsabschnitt eines Erntezusammenbaus und einen Erntezusammenbau (siehe Z.B. EP-A-236 106.)

In der Regel weisen Erntezusammenbauten einen rohrförmigen Schneckenförderer zum Zusammenführen des Guts auf, der einen Übergang des Ernteguts vom Erntezusammenbau auf einen Zuführförderer unterstützt. Derartige Schneckenförderer umfassen in der Regel gegenüberliegende spiralförmige Mitnehmer, um den Schneckenförderer beim Fördern des Ernteguts von den Enden des Erntezusammenbaus zur Mitte des Erntezusammenbaus zu unterstützen, wo das Gut dem Zuführförderer zugeführt wird. Der mittige Abschnitt des Schneckenförderers, der sich vor dem und in der Nähe des Zuführförderers befindet, ist mit einem rotierenden Fingerzusammenbau mit sich ausstreckenden und zurückziehenden Fingern versehen. Bei dem Fingerzusammenbau ist eine feststehende Welle innerhalb des Rohrs des rohrförmigen Schneckenförderers exzentrisch zum rotierenden Rohr angeordnet und im allgemeinen gegen fortdauernde Drehungen der Welle gesichert.

Langgestreckte Einzugsfinger sind auf der exzentrisch angeordneten Welle frei drehbar gelagert, so dass die Finger sich frei auf der Welle drehen können, während die Welle sich selbst nicht dreht. Die Einzugsfinger erstrecken sich im Wesentlichen radial von der Welle und dem Schneckenförderer nach außen und zwar im Allgemeinen aus dem Rohr des Schneckenförderers durch Führungslöcher oder Schlitze in der Wand des Rohrs des Schneckenförderers oder durch Führungslager, die in derartigen Löchern oder Schlitzen in der Wand des Rohrs des Schneckenförderers nach außen. Wenn sich das Rohr dreht, übt die Rotationsbewegung des Schneckenförderers Kräfte auf die Seiten der Finger aus, so dass die Finger gezwungen werden, sich um die Welle zu drehen. Da die Welle gegenüber der Längsachse des Rohrs des Schneckenförderers exzentrisch angeordnet ist, und die Finger sich um die Welle drehen, da sie von den Wänden des Rohrs des Schneckenförderers dazu gezwungen werden, bewegen die Finger sich anscheinend aus den Schneckenförderer hinaus und in ihn hinein, wenn der Schneckenförderer sich um seine Längsachse dreht. Die Welle ist derart innerhalb des Schneckenförderers positioniert, dass sich die Finger aus dem Schneckenförderer hinauserstrecken, um in Erntegut einzugreifen, wenn sich die Finger an der Vorderseite des Erntezusammenbaus befinden und sich nach unten bewegen, um in Erntegut einzugreifen und sich in den Schneckenförderer zurückziehen, wenn sich die Finger nach oben und vorne über die Oberseite des Schneckenförderers bewegen. Eine derartige Positionierung der Welle legt somit das Ausstrecken und Einziehen der Einzugsfinger zeitlich fest, so dass die Finger sich ausstrecken, um in auf dem Boden des Erntezusammenbaus befindliches Erntegut einzugreifen und es einzuziehen und derartiges Erntegut unter den Schneckenförderer zu kehren und es in den Zuführförderer zu bringen, der sich hinter dem Schneckenförderer befindet. Wenn die Finger an der Rückseite des Schneckenförderers hochsteigen, unterstützt das Einziehen der Finger in den Schneckenförderer das Freigeben des Ernteguts durch die Finger und die Übernahme in den Zuführförderer.

Ein Erntezusammenbau muss in einer Vielzahl von Boden- und Erntegutbedingungen arbeiten. Ein derartiger Zusammenbau wird gewöhnlich durch den Bediener so nahe an der Bodenoberfläche wie möglich positioniert, um so viel von dem erntbaren Gut wie möglich zu ernten. Außerdem wird ein Erntezusammenbau häufig bei oder nahe seiner maximalen Kapazität betrieben, um während der Erntesaison eine möglichst hohe Produktion zu erzielen, und während das Erntegut sich auf einem Spitzenwert befindet. Bei einem derartig hohen Anreiz für den Bediener, den Erntezusammenbau bei oder nahe der Kapazitätsgrenzen zu betreiben, ist der Erntezusammenbau einschließlich der Förderelemente und einschließlich des Schneckenförderers und der Finger schweren und fluktuierenden Belastungen ausgesetzt. Da der Erntezusammenbau häufig nahe der Bodenoberfläche betrieben wird, nimmt der Erntezusammenbau zusätzliche Nicht-Erntegutelemente vom Boden auf, zum Beispiel Steine, Dreckklumpen, Abfallmetall und derartiges Material. Derartiges zusätzliches Material findet regelmäßig seinen Weg zum mittigen Abschnitt des Erntezusammenbaus, wo die Finger des Schneckenförderers in derartiges zusätzliches Material eingreifen können.

Während die Finger dimensioniert werden, die durch das Erntematerial ausgeübten Belastungen einschließlich hoher Belastungsniveaus des Ernteguts zu verarbeiten und handzuhaben, sind die Finger empfindlich, durch das gelegentliche Aufnehmen und Zuführen derartigen zusätzlichen Materials von der Oberfläche des Bodens - insbesondere von Steinen - beschädigt oder zerbrochen zu werden. Derartige zerbrochene Finger können die Erntemaschine durchlaufen und dabei die Komponenten der Erntemaschine beschädigen. Zusätzlich sind die Finger normalem Abrieb durch den mit dem Erntegut aufgenommenen Dreck und Sand ausgesetzt, wie auch vom Erntegut selbst.

Es liegt daher ein relativ häufiger Bedarf vor, abgenutzte Finger von Erntezusammenbauten, insbesondere Schneidwerken, zu entfernen und wieder anzubringen und beschädigte oder zerbrochene Finger für Schneckenförderer zu ersetzen.

Die der Erfindung zu Grunde liegende Aufgabe wird darin gesehen, verbesserte Finger für Schneckenförderer bereitzustellen, die gegenüber Beschädigungen weniger empfindlich sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise erhält man einen Einzugsfinger zur Verwendung an einem Einzugsabschnitt eines Erntezusammenbaus für eine Erntemaschine, wie einen Mähdrescher, eine Ballenpresse, einen Maispflücker und dergleichen. Der Einzugsfinger hat eine Länge und umfasst den mittigen, sich längs erstreckenden verstärkten Dorn, der Polymermaterial enthält, nämlich thermisch gehärtetes Polyester und/oder thermoplastisches Polyurethan. Der mittige, sich längs erstreckende Dorn ist vorzugsweise fiberverstärkt, um eine Gesamtfestigkeit des Einzugsfingers bereitzustellen. Der Finger umfasst auch eine Hülse, die den Dorn umschließt und sich von einer Stelle am oder nahe dem äußeren Ende des Dorns entlang des Dorns in Richtung auf das innere Ende des Dorns zu erstreckt. Die Zusammensetzung der Hülse wurde ausgewählt, eine gute Abriebsfestigkeit zu erzielen und ist im Allgemeinen aus thermoplastischen Urethanen ausgewählt, die vorzugsweise auf Polyester basieren, insbesondere aromatischem Polyester. Bei bevorzugten Ausführungsformen erstreckt sich die Hülse über etwa 50 % bis zu etwa 80 % der Länge des Dorns.

Bei einer bevorzugten Ausführungsform hat die Hülse eine Härte von etwa Shore D-45 bis Shore D-70. Sie hat vorzugsweise eine Abnutzungslebensdauer von wenigstens 200 Stunden bei Erntebedingungen.

Eine bevorzugte Ausführungsform des Fingers umfasst eine Befestigungsöffnung, die sich unter der Hülse quer in den Dorn erstreckt. Die Befestigungsöffnung enthält Hülsenmaterial, das beim Befestigen der Hülse am Dorn hilft.

Weiterhin wird vorgeschlagen, dass die Hülse von einer ersten Farbe ist, die sich leicht von einer zweiten Farbe des Dorns unterscheiden lässt, so dass ein Bediener einfach anhand der Farben unterscheiden kann, ob die Hülse derart abgenutzt ist, dass der Finger ersetzt werden sollte. Eine derartige Farbkombination kann auch bei Einzugsfingern Verwendung finden, deren Dorn und Hülse aus anderen als den genannten Materialien hergestellt sind.

Bei bestimmten Ausführungsformen ist eine Kappe am inneren Ende des Fingers vorgesehen, die entlang der Länge des Dorns einen ersten Querschnitt des Dorns mit der Kappe definiert, der sich von einem zweiten, gegenüber der Kappe versetzten Querschnitt des Dorns unterscheidet.

In den Zeichnungen sind zwei nachfolgend näher beschriebene Ausführungsbeispiele der Erfindung dargestellt. Es zeigt:
- Fig. 1: einen seitlichen Querschnitt durch einen Erntezusammenbau,
- Fig. 2: eine perspektivische Ansicht eines drehbaren Schneckenförderers, der einen innerhalb einer rohrförmigen Trommel enthaltenen Fingerzusammenbau umfasst und bei dem die Finger um eine exzentrisch befestigte Welle drehen, wenn sich der Schneckenförderer um die Längsachse der Trommel dreht,
- Fig. 3: einen repräsentativen Längsquerschnitt durch eine erste Ausführungsform erfindungsgemäßer Einzugsfinger,
- Fig. 3A: einen Querschnitt durch den Finger der Figur 3 entlang der Linie 3A-3A der Figur 3,
- Fig. 4: einen repräsentativen Längsquerschnitt durch eine zweite Ausführungsform erfindungsgemäßer Einzugsfinger, und
- Fig. 4A: einen Querschnitt der Finger der Figur 4 entlang der Linie 4A-4A der Figur 4.

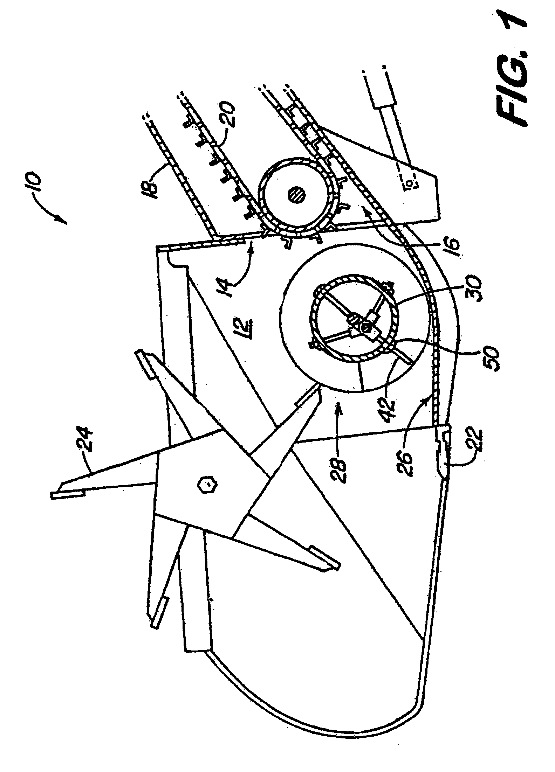

In der Figur 1 ist ein Erntezusammenbau 10 in Form eines Schneidwerks mit einer Trägerstruktur 12 ausgestattet, die einen Auslass 14 hat. Der Auslass 14 entspricht dem Einlass 16 des Schrägförderers 18. Der Schrägförderer 18 ist mit einem Förderer 20 ausgestattet, um das geschnittene Erntegut dem Mähdrescher zuzuführen. Die vordere Kante der Trägerstruktur 12 ist mit einer Schneideinrichtung 22 versehen. Bei dem dargestellten Schneidwerk ist die Schneideinrichtung 22 ein relativ konventioneller, sich hin- und herbewegender Messerbalken. Wenn das Schneidwerk über ein Feld bewegt wird, greift eine rotierende Haspel 24 an den oberen Abschnitten der Pflanzen ein. Die Halme werden durch die Schneideinrichtung 22 abgeschnitten und das abgeschnittene Erntegut fällt auf den Boden 26 der Trägerstruktur 12. Ein sich quer erstreckender drehbarer Schneckenförderer 30 zieht das abgeschnittene Erntegut auf dem Boden 26 zur Mitte des Schneidwerks, wo das abgeschnittene Erntegut durch den Auslass 14 in den Schrägförderer 18 gefördert wird.

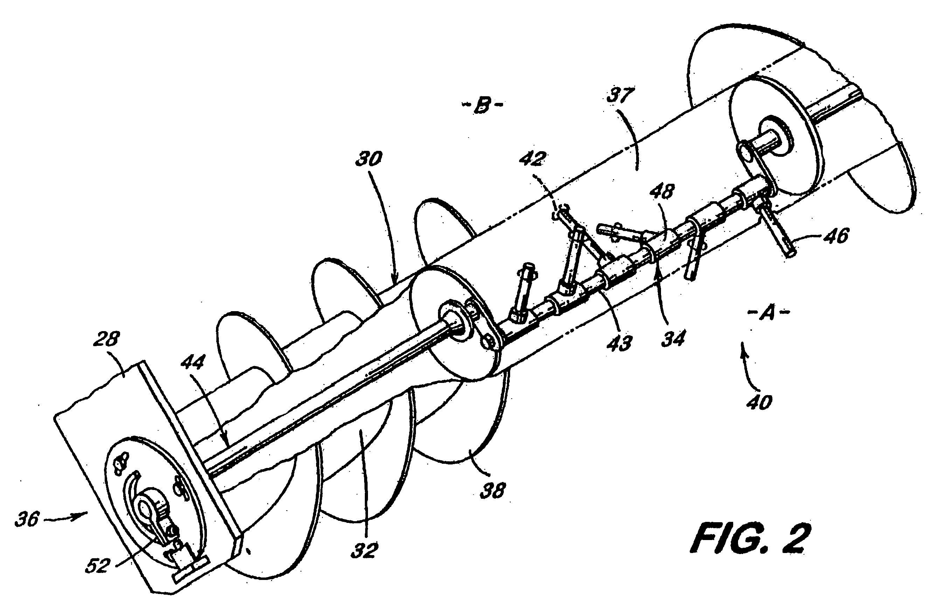

Es wird nun auf die Figuren 1 und 2 Bezug genommen, von denen Figur 2 eine Wand eines Paares quer beabstandeter Seitenwände 28 des drehbaren Schneckenförderers 30 zeigt. Ein derartiger Schneckenförderer 30 wird verwendet, um Erntegut zusammenzuführen, das auf den Boden 26 des Schneidwerks gefallen ist und um derartiges Erntegut dem Förderer 20 des Schrägförderers 18 zuzuführen. Drehbare Schneckenförderer wie der Schrägförderer 30 können beispielsweise in Schneidwerken, Maishäckslern, Maispflückern, Pick-Ups und dergleichen gefunden werden.

Im Einzelnen umfasst der drehbare Schneckenförderer 30 ein zylindrisches Gehäuse in Form einer Trommel 32, die durch eine rohrförmig geformte Schicht blechförmigen Metalls definiert wird, und einen im Wesentlichen eingeschlossenen Hohlraum 37, einen Einzugsfingerzusammenbau 34 innerhalb des Hohlraums 37, und einen Fingersteuerungsmechanismus 36, der im Wesentlichen an der Seitenwand 28 vorgesehen ist.

Die Trommel 32 ist typischerweise aus rohrförmig geformten blechförmigem Metall geformt und hat typischerweise einen Durchmesser von etwa 200 mm bis etwa 400 mm. Gegenüberliegende Enden der Trommel 32 sind drehbar an Lagerungen (nicht gezeigt) abgestützt, die von den Seitenwänden 28 getragen werden. Spiralförmige Kufen oder Mitnehmer 38 gegenüberliegenden Drehsinns sind an der äußeren Umfangsfläche der Trommel 32 befestigt und erstrecken sich entlang der äußeren Oberfläche der Trommel 32 von gegenüberliegenden Enden der Trommel 32 nach innen, um das abgeschnittene Erntegut während ihrer Drehung in Richtung auf die Mitte der Trommel 32 zu fördern.

Eine mittige Region 40 der Trommel 32 zwischen den Kufen 38 enthält den Einzugsfingerzusammenbau und ist mit einer Vielzahl an Öffnungen 42 im Metallblech ausgestattet. Während des Betriebs wird die Trommel 32 durch nicht gezeigte Antriebskomponenten in Drehung gebracht, wie Zahnrädern und Ketten. Der Einzugsfingerzusammenbau 34 umfasst eine Kurbelwelle 44 und eine Vielzahl an Einzugsfingern 46, die auf der Kurbelwelle 44 gelagert sind. Gegenüberliegende Enden der Kurbelwelle 44 erstrecken sich entlang der Achse der Trommel 32 und sind daran vorzugsweise drehbar abgestützt. Die Kurbelwelle 44 ist an der Seitenwand 28 durch wenigstens eine nicht gezeigte Lagerung frei drehbar abgestützt.

Ein mittiger Abschnitt 43 der Kurbelwelle 44 ist innerhalb der mittigen Region 40 der Trommel 32 angeordnet und ist gegenüber der Achse des Rests der Kurbelwelle 44 versetzt, so dass sie gegenüber der mittigen Längsachse der Drehung der Trommel 32 exzentrisch ist. Innere Enden der Finger 46 sind durch Lagerungen 48 befestigt, damit sie sich frei um den mittigen Abschnitt 43 der Kurbelwelle 44 drehen. Finger 46 erstrecken sich durch jeweilige Öffnungen 42 der Trommel 32, wobei die Öffnungen an versetzten Stellen entlang des mittigen Abschnitts 43 der Trommel 32 angeordnet sind, so dass die Finger Abschnitte unterschiedlicher Längen haben, die sich von der Trommel 32 an verschiedenen Orten um den Umfang der Trommel 32 erstrecken.

Die Öffnungen 42 sind vorzugsweise mit Fingerführungen 50 ausgestattet, wie in Figur 1 illustriert, um die Finger zwischen der inneren und äußeren Oberfläche der Trommel 32 verschiebbar abzustützen und zu führen. Geeignete Führungen sind vorzugsweise aus Metall oder einem Hochleistungs-Kunststoff hergestellt.

In der dargestellten Ausführungsform ist der drehbare Schneckenförderer 30 als unterschlächtiger Förderer dargestellt, wobei die Einzugsfinger 46 sich in einem vorderen, stromaufwärtigen Bereich "A" (Figur 2) am weitesten von der Trommel 32 nach außen erstrecken und in einem rückwärtigen, stromabwärtigen Bereich "B", der zum Schrägförderer 18 führt, am wenigsten von der Trommel 32 nach außen erstrecken.

Ein Halter 52 hält die Kurbelwelle 44 wählbar gegen völlig freie Drehung fest und fixiert somit den exzentrischen mittigen Abschnitt 43 an Ort und Stelle, so dass die Finger 46 während der Drehung der Trommel 32 in einer gewünschten Weise arbeiten.

Wie anhand der Figuren 1 und 2 erkennbar ist, sind die Finger 46 derart aufgebaut und gegenüber der Trommel 32 des Schneckenförderers 30 derart angeordnet, dass sie in jegliches Material eingreifen, das von den Kufen 38 des Schneckenförderers 30 auf dem Boden 26 des Schneidwerks präsentiert wird. Daher kann ein Finger 46 einem Bruch ausgesetzt sein, wenn der Finger 46 einem harten oder unbeweglichen Objekt, wie einem Stein auf dem Boden 26 des Schneidwerks begegnet. In dem Fall, dass Teile von den Fingern 46 abbrechen, und falls ein Teil eines gebrochenen Fingers in den Schrägförderer 18 gelangt und somit durch die Erntemaschine, kann ein derartiges abgebrochenes Fingerteil, beispielsweise eines Metallfingers, abhängig von der Größe des abgebrochenen Teils und des Materials, aus dem das abgebrochene Teil zusammengesetzt ist, möglicherweise wesentliche Beschädigungen an verschiedenen Bauteilen und Elementen der Erntemaschine bedingen.

Somit stellt diese Erfindung polymerbasierte Fingerstrukturen bereit, die akzeptable Lebensdauern haben und wobei nur wenig Material derartiger Finger von der Erntemaschine aufgenommen wird, wenn überhaupt, falls ein Finger bricht oder anderweitig versagt. Zusätzlich bedingt, wenn abgebrochene Teile derartiger Finger von der Erntemaschine aufgenommen werden, ein Durchgang dieser Teile durch die Erntemaschine keine Beschädigung oder einen verminderten Betrag an Beschädigungen im Vergleich mit dem Durchgang gebrochener Metallfingerstücke durch die Erntemaschine.

Die Finger 46 müssen hinreichend stark, fest und dauerhaft sein, um Brüchen zu widerstehen, wenn sie Hindernissen oder anderen Materialien begegnen, wenn die Finger Erntegut vom Boden 26 des Schneidwerks in den Schrägförderer 18 kehren. Die Finger 46 müssen im reibenden und schiebenden Kontakt mit Erntegut vom Boden 26 hinreichend abriebfest sein, wie auch gegenüber Geröll, Steinen, Schmutz, Sand, Schotter, Abfallmetall und dergleichen, welche vom Schneidwerk aufgenommen werden, um eine geeignete Verwendungsdauer bereitzustellen, bevor die Finger wegen Abnutzung durch Abrieb ersetzt werden müssen. Die Finger sollten durchschnittlich 200 Stunden im Feldeinsatz der Erntemaschine halten, bevor sie bis zu dem Punkt abgerieben sind, an dem sie wegen Abriebs Ersatz erfordern. Eine bevorzugte Lebensdauer sind 300 Stunden.

Außerdem müssen die für die Verwendung in den Fingern 46 ausgewählten Materialien derart sein, dass die gebrochenen Teile in den Schrägförderer 18 und somit durch die Erntemaschine gelangen können, ohne der Erntemaschine wesentliche Schäden zuzuführen, falls ein Finger bricht.

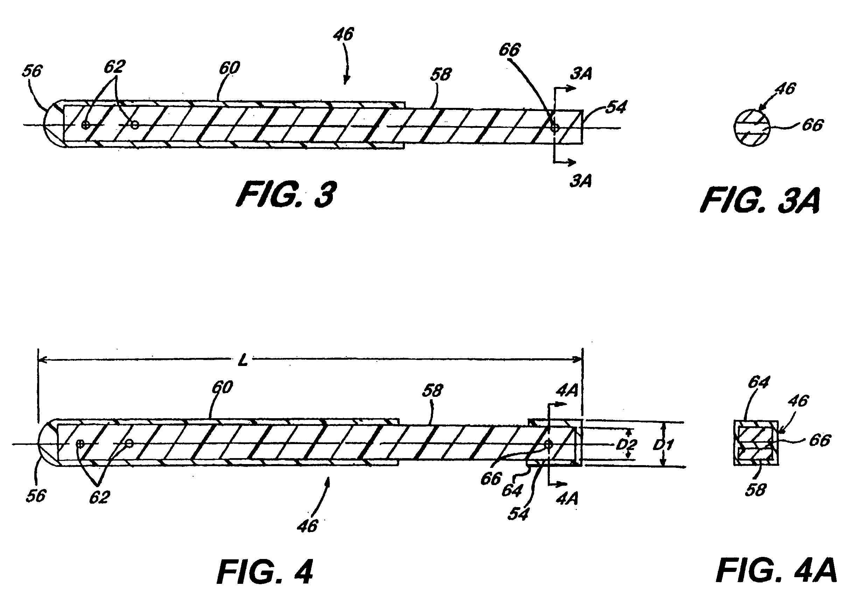

Es wird nun auf die Figuren 3 und 3A verwiesen, in denen ein erfindungsgemäßer Finger 46 eine Gesamtlänge "L", einen Gesamtaußendurchmesser "D1", einen kleineren Durchmesser "D2", ein inneres Befestigungsende 54 und ein äußeres, in das Erntegut eingreifendes Ende 56 hat. Der Aufbau des Fingers 46 umfasst einen mittigen Dorn 58 und eine äußere Hülse 60. Der mittige Dorn 58 stellt den Hauptteil der physikalischen Stärke bereit, die die Festigkeit des Fingers gegenüber Bruch bereitstellt. Das Material der Hülse 60 ist wegen seiner Fähigkeit ausgewählt, eine gegenüber Abrieb durch solche Materialien, wie sie den Fingern 46 im Erntezusammenbau 10 begegnen, geeignet resistente Oberfläche bereitzustellen. Außerdem sollte die Hülse 60 gegenüber einer Abnutzung durch die Fingerführungen 50 oder die Trommel 32 resistent sein.

Somit widersteht der Finger 46 regelmäßig sowohl der Abnutzung an der Oberfläche des Ernteguts als auch an der Schnittstelle zwischen dem Finger 46 und der jeweiligen Fingerführung 50 oder Trommel 32. Diesbezüglich erstreckt sich die Hülse 60 vom äußeren Ende des Fingers 46 über die Länge des Fingers bis wenigstens zu der Stelle entlang der Länge des Dorns 58, wo der Finger mit der Fingerführung 50 oder der Trommel 32 zusammenwirkt, wenn der Finger bis zum größten Ausmaß seiner Erstreckung ausgestreckt ist.

Ein typischer derartiger Finger hat einen Gesamtdurchmesser von etwa 18 bis 23 mm, mit einem bevorzugten Durchmesser von etwa 20 bis 21 mm. Der kleinere Durchmesser "D2" des Dorns 58 ist typischerweise etwa 11 bis 18 mm mit bevorzugtem Durchmesser von etwa 13 bis 16 mm. Während sowohl der Querschnitt des Dorns 58 als auch der Gesamtquerschnitt des Fingers 46 als kreisförmig dargestellt sind, kann einer der Querschnitte oder beide Querschnitte beliebige andere gewünschte Formen haben, wobei entsprechende Veränderungen an den Elementen des Erntezusammenbaus 10 durchzuführen sind, die mit den Fingern zusammenwirken. Es können daher ovale, rechteckige, quadratische und andere polygonale oder kurvenförmige Formen des Dorns 58 und der Hülse 60 genannt werden.

Die Zusammensetzung des Dorns 58 muss fest, hart und gegenüber Brüchen und anderem Versagen unter Feldbedingungen resistent sein. In dem Fall, dass der Dorn versagt, sollte ein derartiges Versagen in einer derartigen Weise erfolgen, dass die Wahrscheinlichkeit begrenzt ist, dass Teile des gebrochenen Fingers vom Finger getrennt und vom Schrägförderer 18 gemeinsam mit dem verarbeiteten Erntegut aufgenommen werden.

Die Zusammensetzung und Oberflächenstruktur des Dorns muss fähig zur Bindung mit dem Material der Hülse 60 sein. Diesbezüglich und mit Verweis auf die Figuren 3 und 3A erstrecken sich zwei Öffnungen 62 ganz durch den Dorn 58. Die Öffnungen 62 können alternativ Sacköffnungen sein, die sich in den Dorn 58, aber nicht ganz durch ihn hindurch erstrecken. Die bevorzugten Öffnungen erstrecken sich aber ganz durch den Dorn 58. Bevorzugte Öffnungen 62 haben einen Durchmesser von etwa 3 bis 6 mm an der äußeren Oberfläche des Dorns 58. Der Querschnitt einer gegebenen Öffnung kann sich ganz durch den Dorn 58 erstrecken oder auch nicht. Wenn die Öffnung sich ganz durch den Dorn 58 erstreckt, kann der Querschnitt bei einigen oder allen Eindringtiefen in den Dorn rund sein oder auch nicht, und der Querschnitt kann sich über die Länge der Öffnung ändern.

Die Öffnungen 62 sind im Wesentlichen mit dem Material der Hülse 60 gefüllt, wenn die Hülse 60 um den Dorn 58 herumgegossen wird, wobei die Öffnungen und das Hülsenmaterial in den Öffnungen dabei helfen, das Hülsenmaterial am Dorn 58 zu haltern.

Geeignete Materialien zur Verwendung als Dorn 58 sind Pultrusionen, die aus thermisch gehärtetem Polyester, verstärkt mit Glasfasern zusammengesetzt sind. Stäbe derartiger Pultrusionen sind von der Fa. Creative Pultrusions, Inc.,- Alum Bank, Pennsylvania, US, als Pultex ® fiberverstärkte Polymerstäbe erhältlich. Geeignete Stäbe haben Durchmesser von etwa 16 mm und werden wie erforderlich auf Längen zurecht geschnitten, um Finger mit typischen Längen "L" von etwa 265 bis 285 mm nach Anbringung der Hülse 60 bereitzustellen.

Alternative Materialien, die geeignet hergestellt und mit Fiberglas verstärkt werden können, um einen Dorn 58 für einen Finger 46 herzustellen, sind thermoplastische Ingenieurspolyurethane, die von der Dow Chemical Company, Midland, Michigan, US, als Fulcrum ® erhältlich sind.

Typische für das Dornmaterial verwendete Kompositionen sind mit Fibern verstärkt, wie Fiberglasfibern. Bei typischen derartigen Kompositionen umfassen die Fibern etwa 25 Prozent bis etwa 70 Prozent, vorzugsweise etwa 45 bis etwa 65 Prozent des Volumens der jeweiligen Komposition.

Die Hülse 60 erstreckt sich entlang und um die Länge des Dorns 58 und bedeckt den Dorn 58 typischerweise über etwa 60 bis 80 Prozent seiner Länge, um eine Bedeckung des Dorns mit der Hülse 60 über die Länge des Fingers 46 bereitzustellen, die direkt mit dem Erntegut bzw. einer Führung 50 oder Öffnung 42 zusammenwirken wird. Während sich die Hülse 60 über die gesamte Länge des Dorns erstrecken kann, ist eine derartige Erstreckung über die gesamte Länge nicht bevorzugt. In ähnlicher Weise kann sich die Hülse über weniger als 60 Prozent der Länge des Dorns 58 erstrecken, aber dann ist ein wesentlicher Teil der Länge des Dorns 58 nicht für den Eingriff in das Erntegut oder für Führungseingriff durch die Hülse verfügbar, wobei eine Hülse, die weniger als 50 Prozent der Länge des Fingers 46 abdeckt, nicht bevorzugt ist.

Die Hülse 60 muss hinreichend hart sein, damit sie nicht durch abreibendes Erntegut oder anderes, den Erntezusammenbau 10 durchlaufendes Material vom Dorn 60 abgezogen wird. Eine Härte vom Shoregrad D45 bis D70 ist bevorzugt. Noch bevorzugter ist eine Härte von etwa D55 bis etwa D60.

Das Hülsenmaterial muss auch hinreichend gegenüber den Materialien, die normalerweise aufgenommen und auf dem Boden 26 des Schneidwerks abgelegt werden, abriebresistent sein, um dem typischerweise bei Feldeinsatzbedingungen bei Wechselwirkung mit derartigem aufgenommenen Material erfahrenen Abrieb widerstehen zu können. Eine Abriebfestigkeit von nicht mehr als 70 mg Taber-Abrieb, ASTM D3489, ist akzeptabel, wobei ein Taber-Abrieb von etwa 50 mg oder weniger noch bevorzugter ist.

Geeignete Materialien zur Verwendung als Hülse 60 sind bestimmte aromatische polyesterbasierte thermoplastische Polyurethane, die die nötige Härte und Abriebsfestigkeit haben. Beispiele derartiger polyesterbasierter Polyurethane sind aus der Texin®-Familie von Harzen, die von Bayer Plastics, Pittsburgh, PA, US, erhältlich sind. Bevorzugte derartige Harze sind Texin® 255 und Texin® 260. Diese haben Taber-Abriebswerte von 50 mg Verlust.

Bei bevorzugten Fingern 46 widersteht der Dorn 58 typischerweise den strukturellen Kräften von Stößen, Biegungen und dergleichen länger als das Hülsenmaterial dem Abrieb durch das Material, das den Boden des Erntezusammenbaus 10 überquert, widersteht. Man wägt daher die Dicke des Dorns 58 und die eine derartige Dicke begleitende Stärke gegen die Dicke der Hülse 60 und die eine derartige Dicke der Hülse begleitende Abriebszeit ab. Im Allgemeinen ist die durchschnittliche Dicke der Hülse 60 zwischen der Schnittstelle der Hülse 60 mit dem Dorn 58 und dem äußeren Gesamtdurchmesser "D1" etwa 1,5 mm bis etwa 6 mm. Innerhalb des oben genannten Bereichs wird die Stärke der Hülse selbstverständlich von der Stärke des Materials abhängen, das bei der Herstellung des Dorns 58 verwendet wird, wie auch von den Abriebseigenschaften der Hülse 60. Dicken außerhalb der oben genannten Bereiche sind möglich, wo geeignete kostengünstige Materialien erhältlich sind, um die oben aufgeführte Abwägung zwischen der physikalischen Stärke des Dorns 58 und der Abriebstoleranz des Hülsenmaterials bereitzustellen.

Die Figuren 4 und 4A illustrieren eine zweite Ausführungsform eines Aufbaus eines Fingers 46. Wie anhand dieser Figuren erkennbar ist, umschließt ein zweites Segment von Hülsenmaterial das innere Ende des Fingers 46 als Befestigungskappe 64. Die Kappe 64 ist derart gestaltet und konfiguriert, dass sie mit den Strukturen der Fingerlagerungen 48 zusammenwirkt, so dass der Finger 46 leicht an der zugeordneten Fingerlagerung 48 befestigbar ist. Während die Kappe 64 im Wesentlichen rechteckig dargestellt ist, kann sie jede gewünschte Form haben, die an den Dorn 58 angießbar und zur zuverlässigen und leichten Anbringung des Fingers 48 an der Fingerlagerung 48 geeignet ist.

Wie beim äußeren Ende des Dorns 58 ist eine Befestigungsöffnung 66 am inneren Ende des Dorns 58 angeordnet. Die obige Diskussion bezüglich des Aufbaus und der Anordnung der Öffnungen 62 ist auch auf die Öffnung 66 anwendbar, da die Öffnung 66 verwendet wird, die Anbringung und Befestigung der Kappe 64 am inneren Ende des Dorns 58 zu unterstützen.

Die Hülse 60 kann auf den Dorn 58 fabriziert werden, indem der Dorn 58 in einer geeigneten Spritzform platziert wird, die geeignete Abmessungen aufweist, so dass sie für das Hülsenmaterial einen Raum bereitstellt, damit es entlang der jeweiligen Länge des Dorns um den Dorn herum fließen kann, und das Hülsenmaterial im Spritzgussverfahren auf den Dorn aufgebracht wird. Wenn das Hülsenmaterial den Dorn umfließt, fließt es auch in und durch jegliche Öffnungen 62, um die Öffnungen teilweise oder ganz mit dem Hülsenmaterial zu füllen. Eine derartige Ausdehnung des Hülsenmaterials in die Öffnungen verriegelt das Hülsenmaterial mechanisch am Dorn 58, zusätzlich zu jeglicher adhäsiven und mechanischen Reibung, die sich zwischen dem Dorn 58 und dem Hülsenmaterial ergibt, wenn das Hülsenmaterial abkühlt und sich verfestigt.

Um die erwartete Arbeitsumgebung aushalten zu können, einschließlich des Abriebs und der Stoßereignisse, sollten die Finger 46 statische Knickmomente von wenigsten 2500 Nm aushalten können, vorzugsweise 4000 Nm. Ein derartiges Knickmoment wird folgendermaßen geprüft. In einem Tinius Olsen Tensile Tester wird der Dorn 58 von oben abgestützt und vorzugsweise auch von unten, an der Öffnung 66. Der Finger 46 wird von einem darunter liegenden Drehpunkt an einer Entfernung von etwa 95 mm von der Öffnung 66 abgestützt. Eine Last wird weiter unten bei etwa 12 mm Abstand von dem äußeren Ende des Fingers aufgebracht. Die Last wird nach und nach gesteigert, indem das Lastelement nach unten bewegt wird und der vom Finger ausgeübte Lastwiderstand gemessen wird. Das Ende des Tests ergibt sich, wenn ein signifikanter Fehler auftritt, was eine beträchtliche Verminderung der aufgezeichneten Last zur Folge hat.

Bei der Verwendung eines derartigen Tests brechen Metallfinger im Allgemeinen vom gehaltenen Stutzen am inneren Ende des Fingers ab, ohne wesentliche Ablenkung vor dem Bruch. Erfindungsgemäße Finger erfahren wesentliche Ablenkung vor dem Bruch und brechen im Allgemeinen ohne vollständige Trennung von Fingerelementen vom abgestützten Stutzen oder nur mit begrenzter Materialabtrennung. Erfindungsgemäße Finger tendieren hingegen zum Knicken mit gelegentlichem Versagen des Fingers oder Dornmaterials entlang der Länge des Fingers. Wo hinreichend lange Verstärkungsfibern verwendet werden, trennt sich der geknickte oder versagende Teil des Fingers nicht vom abgestützten Stutzen. Derartige Fehler bringen in der Regel die fibrigen Einschlüsse darin zum Vorschein, wobei die fibrigen Einschlüsse typischerweise eine Trennung des äußeren Endes des Fingers vom inneren Finger bei derartigen Tests verhindern.

Die hier offenbarten Finger unter Verwendung von Texin®-Polyurethanhülsenmaterial auf z.B. Pultex®-Dornen haben durchschnittliche Verwendungslebensdauern von mehr als 300 h, z.B. etwa 300 bis 400 h, bei der Feldverwendung beim Ernten von typischen kleinen Körnern oder Mais. Wenn derartige Finger brechen, wird der Rest der Erntemaschine in der Regel nicht beschädigt, wobei die Reparatur auf den Ersatz von Fingern und optional Fingerführungen 50 und/oder Fingerlagerungen 48 beschränkt ist.

Während Fiberglasverstärkungsfibern dargestellt wurden, können auch andere Fibern verwendet werden, wenn sie die gewünschte Stärke und Trennwiderstände gegenüber einer Abtrennung des äußeren Endes des Fingers vom inneren Ende des Fingers bereitstellen. Es können beispielsweise, aber nicht einschränkend, verschiedene Metallfibern und keramische Fibern, wie auch Karbonfibern genannt werden.

## Patentansprüche

1. Einzugsfinger (46) zur Verwendung an einem Einzugsabschnitt eines Erntezusammenbaus (10), mit
(a) einem mittigen, sich längs erstreckenden, verstärkten Dorn (58), der wärmegehärtetes Polyester und/oder thermoplastisches Polyurethan enthält und
(b) einer Hülse (60), die eine thermoplastische Polyurethanzusammensetzung enthält und den Dorn (58) umschließt und sich von einer Stelle nahe dem oder am äußeren Ende des Dorns (58) entlang der Länge des Dorns (58) erstreckt.

2. Einzugsfinger (46) nach Anspruch 1, wobei die Zusammensetzung der Hülse (60) polyesterbasiertes thermoplastisches Polyurethan umfasst.

3. Einzugsfinger (46) nach Anspruch 2, wobei die Zusammensetzung der Hülse (60) aromatisches polyesterbasiertes thermoplastisches Polyurethan umfasst.

4. Einzugsfinger (46) nach einem der Ansprüche 1 bis 3, wobei eine Befestigungsöffnung (62) sich unter der Hülse (60) quer in den Dorn (58) erstreckt und Hülsenmaterial enthält.

5. Einzugsfinger (46) nach einem der Ansprüche 1 bis 4, wobei die Hülse (60) von einer ersten Farbe ist, die von der Farbe des Dorns (58) unterscheidbar ist.

6. Einzugsfinger (46) nach einem der Ansprüche 1 bis 5, wobei am inneren Ende des Fingers (46) eine separate Kappe (64) angeordnet ist.

7. Einzugsfinger (46) nach einem der Ansprüche 1 bis 6, wobei der Dorn (58) durch Fibern, insbesondere Fiberglas, verstärkt ist.

8. Erntezusammenbau (10) mit einem Schneckenförderer (30) und daran angeordneten Einzugsfingern (46) nach einem der vorhergehenden Ansprüche.

## Claims

1. Retractable finger (46) for use on a retractable portion of a harvesting assembly (10), having
(a) a central, longitudinally-extending, reinforced mandrel (58) which contains heat-cured polyester and/or thermoplastic polyurethane and
(b) a shell (60) which contains a thermoplastic polyurethane composition and surrounds the mandrel (58) and extends from a position close to or at the outer end of the mandrel (58) along the length of the mandrel (58).

2. Retractable finger (46) according to claim 1, the composition of the shell (60) comprising polyester-based thermoplastic polyurethane.

3. Retractable finger (46) according to claim 2, the composition of the shell (60) comprising aromatic polyester-based thermoplastic polyurethane.

4. Retractable finger (46) according to one of the claims 1 to 3, an attachment opening (62) extending below the shell (60) transversely into the mandrel (58) and containing shell material.

5. Retractable finger (46) according to one of the claims 1 to 4, the shell (60) being of a first colour which is distinguishable from the colour of the mandrel (58).

6. Retractable finger (46) according to one of the claims 1 to 5, a separate cap (64) being disposed on the inner end of the finger (46).

7. Retractable finger (46) according to one of the claims 1 to 6, the mandrel (58) being reinforced by fibres, in particular fibre glass.

8. Harvesting assembly (10), having a screw conveyor (30) and retractable fingers (46) disposed thereon, according to one of the preceding claims.

## Revendications

1. Doigt d'entraînement (46), destiné à être utilisé sur la section d'entraînement d'un ensemble de récoltes (10), et comportant :
a) une pointe centrale renforcée (58), s'étendant longitudinalement et qui contient un polyester thermodurcissable et/ou un polyuréthane thermoplastique, et
b) une douille (60) qui contient une composition thermoplastique à base de polyuréthane et qui enveloppe la pointe (58) et qui s'étend sur la longueur de la pointe (58), à partir d'un emplacement voisin de, ou situé à l'extrémité extérieure de la pointe (58).

2. Doigt d'entraînement (46) selon la revendication 1, dans lequel la composition de la douille (60) comporte un polyuréthane thermoplastique à base de polyester.

3. Doigt d'entraînement (46) selon la revendication 2, dans lequel la composition de la douille (60) contient un polyuréthane thermoplastique à base de polyester aromatique.

4. Doigt d'entraînement (46) selon l'une quelconque des revendications 1 à 3, dans lequel une ouverture de fixation (62) s'étend obliquement dans la pointe (58), sus la douille (60), et contient du matériau pour douilles.

5. Doigt d'entraînement (46) selon l'une quelconque des revendications 1 à 4, dans lequel la douille (60) est d'une première couleur, qui est différenciable de la couleur de la pointe (58).

6. Doigt d'entraînement (46) selon l'une quelconque des revendications 2 à 5, dans lequel, à l'extrémité intérieure du doigt (46) est placée une calotte séparée (64).

7. Doigt d'entraînement (46) selon l'une quelconque des revendications 1 à 6, dans lequel la pointe (58) est renforcée par des fibres, en particulier des fibres de verre.

8. Ensemble de récolte (10), comportant un système d'alimentation à vis sans fin (30), et des doigts d'entraînement (46) conformes à l'une quelconque des revendications précédentes, montés sur lui.
